**Europäisches Patentamt**

**European Patent Office**

**Office européen des brevets**

(19)

(11) Veröffentlichungsnummer: **0 040 821**
**B1**

(12) **EUROPÄISCHE PATENTSCHRIFT**

(45) Veröffentlichungstag der Patentschrift:
12.10.88

(21) Anmeldenummer: **81103907.2**

(22) Anmeldetag: **21.05.81**

(51) Int. Cl.⁴: **B 01 J 20/26,** C 09 K 3/32,
G 21 F 9/12

(54) Synthetisches Adsorbens für Basen und Säuren.

(30) Priorität: 22.05.80 DE 3019550
15.04.81 DE 3115172

(43) Veröffentlichungstag der Anmeldung:
02.12.81 Patentblatt 81/48

(45) Bekanntmachung des Hinweises auf die Patenterteilung:
12.10.88 Patentblatt 88/41

(84) Benannte Vertragsstaaten:
AT BE CH DE FR GB IT LI NL SE

(56) Entgegenhaltungen:
DE-A-1 519 772

(73) Patentinhaber: Gubela, Hans-Erich, Hundeberg 17,
D-7595 Sasbachwalden (DE)

(72) Erfinder: Gubela, Hans-Erich, Hundeberg 17,
D-7595 Sasbachwalden (DE)

(74) Vertreter: Werner, Hans-Karsten, Dr.,
Deichmannhaus am Hauptbahnhof, D-5000 Köln 1
(DE)

# 0 040 821

**Beschreibung**

Durch die DE-Patentschrift 1 132 545 ist die Verwendung von durch Kondensation von Aminoplaste oder Phenolpaste bildenden Verbindungen und Aldehyden enthaltenden porösen gehärteten Kunstharzen zum Reinigen von organischen Lösungsmitteln, die als Waschflüssigkeit für Textilgewebe verwendet wurden, bekannt. Bei dieser Lösung ist der Schaumkunststoff ein Filter, der Fette, Duftstoffe und Appreturmittel bindet, jedoch nicht die Reinigungsmittel, insbesondere Tetrachlorkohlenstoff, Trichloräthylen, Tetrachloräthylen, Benzol oder Benzin.

Durch die DE-Offenlegungsschrift 1 519 772 ist zum Aufnehmen von Ölen, Alkoholen oder dergleichen vorgeschlagen worden, daß Schaumkunststoffe auf Aminoplast- oder Phenolplast-Basis, Melaminformaldehydharze und deren Kombinationen in Form von Stücken, Platten oder Körpern mit den aufzunehmenden Flüssigkeiten in Berührung gebracht, gegebenenfalls in diese eingetaucht werden. Auch geht ein Vorschlag dahin, daß mit Hilfe der Schaumkunststoffe Petroläther, Benzin, Benzol, Butanol, Anilin usw. aus Wasser aufgenommen werden, wobei diese Stoffe aus dem Schaumkunststoff durch Auspressen, Destillieren oder ähnliche Arbeitsgänge gewonnen werden. Auch werden Flecke von Öl oder anderen Stoffen auf Gewässern mit Hilfe von aufgespritzten oder aufgestreuten Schaumstoffen aufgenommen oder netzartige Gewebe mit Schaumstoff ausgefüllt und über und/oder durch das mit Öl oder dergleichen verunreinigte Wasser gezogen.

Um beim Katastrophenschutz oder dergleichen notwendigen Fällen Säuren oder Basen unschädlich zu machen, werden beispielsweise Säuren mit Soda behandelt und dadurch neutralisiert. Durch eine Behandlung mit Soda geschieht vielfach, daß zuviel Soda zugegeben wird und dann ein Überschuß an chemischer Lauge vorliegt. Das neutralisiert Produkt wird anschließend durch anorganische Stoffe mit hohem Saugvermögen abgebunden. Diese anorganischen Stoffe mit hohem Saugvermögen zufolge einer Vielzahl feinporiger Zellen sind z. B. Perlit, Kieselgur oder Vermiculit. Das Behandeln einer Base mit einer Säure oder einer Säure mit einer Base erfordert neben der Kenntnis chemischer Vorgänge eine große Umsicht und Sorgfalt, damit keine schädlichen Reaktionen stattfinden. Vielfach treten, abhängig von den zu neutralisierenden Chemikalien, auch schädliche oder gefährliche Dämpfe auf.

Die bisherige Neutralisation oder Abbindung gefährlicher Säuren und Basen durch anorganische hochporöse Stoffe, wie die vorgenannten Perlit, Kieselgur oder Vermiculit, hat den weiteren Nachteil, daß diese Stoffe nicht oder nur sehr schwierig vernichtbar sind, weil diese bei üblichen Verbrennungstemperaturen nicht brennbar, insbesondere nicht rückstandslos verbrennbar sind und daher diese bei ihrer späteren Ablagerung die aufgesogenen Stoffe weiterhin enthalten, die dann unter Einwirkung von Wasser aus den Stoffen, die sie zunächst aufnehmen, wieder entweichen und so eine weitere Gefahr darstellen können.

Die vorliegende Erfindung geht von der Aufgabe aus, ein Adsorbtionsmittel zu wählen, das mit einem äußerst hohen Aufsaugvolumen Flüssigkeiten schadlos aufnimmt und abbindet un zugleich durch Verbrennung weitgehend rückstandsfrei zu vernichten ist.

Zur Lösung dieser Aufgabe wird zum Aufsaugen der im Anspruch 1 angegebenen Stoffe die Verwendung von geschlossenzelligem Phenolharzschaum, der gemahlen worden ist, vorgeschlagen.

Neben Flüssigkeiten kann es sich auch um solche Konsistenzen handeln, die aufsaugbar oder an die Schaumkunststoff-Partikel anlegbar sind.

Es können auch kleine Kugeln, insbesondere Hohlkugeln aus Phenolharz, die auch als Microballons bezeichnet werden, gemahlen werden.

Bei einem Mahlen mit gleichem Werkzeug sind beim Mahlen eines geschlossenzelligen Phenolharzschaumes die Summe der einzelnen, durch die gebrochenen Zellwände gebildeten Oberflächen bedeutend größer als beim Mahlen eines offenzelligen Phenolharzschaumstoffes. Auch haben die einzelnen, durch das Mahlen eines geschlossenzelligen Phenolharzschaumes erhaltenen Partikel eine überwiegende schalenförmige Raumform, während beim Mahlen eines offenzelligen Phenolharzschaumes in der Bemessung kleinere und entsprechend flachere Partikel vorhanden sind. Auch ergibt sich in vielen Fällen, daß mit dem Mahlen von geschlossenzelligem Phenolharzschaum eine Zelle nur eine einzige Öffnung erhält, während beim Mahlen von offenzelligem Phenolharzschaum mindestens eine weitere Öffnung vorhanden ist, so daß die Flüssigkeit durchfließen kann.

Ein geschlossenzelliger Phenolharzschaum, der gemahlen ist, hat somit zufolge der größeren Oberflächen der Partikel und deren im wesentlichen schalenförmigen Raumform ein höheres Anlagevermögen und entsprechend erheblich verbessertes Aufsaugevermögen als ein offenzelliger Phenolharzschaum, der gemahlen worden ist.

Feinflockiger Phenolharzschaum hat die Fähigkeit, in hohem Maße eine große Vielzahl verschiedenartiger Säuren und Basen aufzusaugen und durch Anlagerung zu binden, ohne dabei in einem solchen Maße angegriffen zu werden, daß das Aufsaugvermögen oder Festhaltevermögen der aufgesogenen Stoffe leidet. Die Säuren oder Basen können von anorganischer oder organischer Art sein. Ein einheitlicher Stoff ist somit zum gefahrlosen Aufsaugen und Festhalten verschiedenartigster Flüssigkeiten befähigt.

In weiterer erfindungsgemäßer Ausgestaltung wird vorgeschlagen, daß der Phenolharzschaum zum Aufsaugen einer Base mit einer Säure und zum Aufsaugen einer Säure mit einer Base behandelt, belegt oder gemischt ist, damit die Neutralisation des aufgesogenen Stoffes mit oder im Schaumkunststoff stattfindet. So ist das Phenolharzmehl oder Granulat zu einer Säureneutralisation besonders vorteilhaft mit einem Calciumcarbonat gemischt.

2

Zur Prüfung des geschlossenzelligen Phenolharzschaumes, der gemahlen worden ist, bei Raumtemperatur gegenüber einzelnen Substanzen und Lösungen wurde jeweils 1 g des Versuchsmaterials in einen Erlenmeyer-Kolben (Größe 250 ml) eingewogen. Anschließend wurden 10 ml der aufzusaugenden Flüssigkeit unter gleichmäßiger Verteilung hinzugegeben. Nach einer Standzeit von fünf Minuten wurde der Inhalt des Erlenmeyer-Kolbens auf ein Drahtsiebgewebe gegeben. Der nicht aufgesaugte Anteil der Flüssigkeit tropfte ab. Nach einer Abtropfzeit von zwei Minuten wurde die nicht aufgesaugte Flüssigkeitsmenge gemessen. Nach Abtropfen des nicht aufgesaugten Anteils der Flüssigkeit war der beladene Chemikalienbinder mit mechanischen Hilfsmitteln (z. B. Schaufel) aufnehmbar. Bei einigen höherviskosen Flüssigkeiten, in der Tabelle 1 mit*) gekennzeichnet, war eine Volumenmessung unzweckmäßig. In diesen Fällen erfolgte die Zugabe der zu prüfenden Flüssigkeit nach Gewicht (10 g Flüssigkeit zu 1 g Chemikalienbinder) und es wurde lediglich eine qualitative Beurteilung der Aufsaugwirkung vorgenommen. Bei diesen Materialien ergab sich außerdem die Notwendigkeit, durch mechanisches Verteilen mit einem Spachtel eine gleichmäßige Vermischung mit dem Chemikalienbinder zu erreichen.

In allen Fällen wurde der mit der jeweiligen Prüfflüssigkeit getränkte Chemikalienbinder nach einer Aufbewahrungszeit von 48 Stunden bei Raumtemperatur im offenen Gefäß in Bezug auf Farbe und Beschaffenheit beurteilt.

Die Prüfungsergebnisse sind in der nachfolgenden Tabelle zusammengestellt.

| Geprüfte Flüssigkeit | Stoffgruppe oder Bestandteile | Afsaugwirkung[1] | | Beurteilung nach 48 Std. Lagerzeit | |
|---|---|---|---|---|---|
| | | pro l RAPID | pro kg RAPID | Beschaffenheit | Farbe |
| Abbeizer | Clorkohlenwaserstoffe/Alkohole | *) | *) | fest | hellocker |
| Acetaldehyd | Aldehyde | 1,49 l[2] | 7,95 kg[2] | trocken | hellrosa |
| Aceton | Ketone | 1,14 l | 6,01 kg | trocken | hellrot |
| Ammoniak, konz. | Laugen | 1,19 l | 7,21 kg | feucht | braun |
| Ammoniak, verd. (10 %) | Laugen | 1,11 l | 7,10 kg | trocken | hellbraun |
| Anilin | Amine | 1,05 l | 7,15 kg | trocken | braun |
| Anstrichfarbe, weiß | Bindemittel, Pigmente, Lösemittel | *) | *) | feucht | weiß |
| Benzoylchlorid | Säurechloride | 0,99 l | 8,04 kg | feucht | weinrot |
| Butylenglykol | Polyalkohole | 1,05 l | 7,17 kg | feucht | dunkelrot |
| Butylamin | Amine | 1,14 l | 5,63 kg | trocken | hellgelb |
| Chloroform | Chlorkohlenwasserstoffe | 1,05 l | 10,41 kg | trocken | unverändert |
| Diethylether | Ether | 1,22 l | 5,96 kg | trocken | unverändert |
| Druckfarbe, schwarz | Pigmente, Lösemittel | *) | *) | feucht | schwarz |
| Essigsäure, konz. (Eisessig) | organische Säuren | 1,05 l | 7,24 kg | feucht | unverändert |
| Ethylalkohol | Alkohole | 1,13 l | 6,06 kg | trocken | dunkelgelb |
| Fixierbad | Salzlösungen | 1,04 l | 6,93 kg | feucht | hellbraun |
| Fotoentwickler | organische Salzlösungen | 1,05 l | 6,99 kg | feucht | braun |
| Glykol | (Poly)-Alkohole | 0,95 l | 7,04 kg | feucht | unverändert |
| Natronlauge | Laugen | 1,29 l | 12,61 kg | feucht | dunkelbraun |

| Phosphorsäure (85 %) | Anorganische Säuren | 1,13 l | 12,87 kg | feucht | unver-ändert |
|---|---|---|---|---|---|
| Pyridin | organische Basen | 1,04 l | 6,81 kg | feucht | braun |
| Salzsäure, konz. | Anorganische Säuren | 0,99 l | 7,42 kg | feucht | unver-ändert |
| Salzsäure, verd. | Anorganische Säuren | 0,99 l | 6,92 kg | feucht | unver-ändert |
| Schwefelsäure, konz. | Anorganische Säuren | 1,23 l | 15,09 kg | feucht | schwar |
| Schwefelsäure, verd. (10 %) | Anorganische Säuren | 0,96 l | 6,84 kg | feucht | unver-ändert |
| Styrol | Kunststoff-Monomere | 0,92 l | 5,56 kg | feucht | dunkel rot |
| Weichmacher | Ester | *) | *) | feucht | unverändert |

*)Qualitative Beurteilung:
Aufsaugwirkung vorhanden unter Verdickung des Gemisches aus Chemikalienbinder und zu prüfender Flüssigkeit. Das Gemisch läßt sich mit mechanischen Hilfsmitteln (z. B. Schaufel) aufnehmen.
1) Beurteilt 5 Minuten nach Zugabe
2) Bei Zugabe von Acetatldehyd erfolgt Erwärmung (bis etwa 35° C) unter Gasentwicklung

Die Umrechnung der in Tabelle 1 erhaltenen Versuchsergebnisse auf Volumen- und Massenangaben erfolgte mit Hilfe von Literaturangaben über die Dichten der aufzusaugenden Flüssigkeiten unter Zugrundelegung einer Schüttdichte des Phenolharzschaumes von 0,15 kg pro Liter.

Es wurde festgestellt, daß die Bindefähigkeit des Phenolharzschaumkunststoffes nicht nur auf der kapillaren Wirkung des Stoffes beruht, sondern auf einer Anlage an den äußeren und inneren Oberfläche, wobei die Bindefähigkeit so groß ist, daß eine Gasentwicklung, z. B. bei stark gasenden Stoffen, erheblich reduziert wird. Dies zeigte sich besonders beim Aufsaugen von Tetrahydrothiophen. Obwohl die Oberfläche des pulver- oder kornförmigen Phenolharz-Schaumkunststoffes erheblich größer war als die Fläche der ausgelaufenen Flüssigkeit auf dem Boden, nahm die Verdunstung erheblich ab und war erheblich geringer als die der vorher unbehandelten, d.h. nicht abgedeckten Flüssigkeitsfläche. Das gleiche Ergebnis wird bei zahlreichen Lösungsmitteln oder Benzin erreicht.

Der Phenolharz-Schaumkunststoff ist auch zum Aufsaugen von Tetra-methylblei Pb (CH$_3$) oder Tetra-ehtylblei Pb (C$_2$H$_5$) oder Flußsäure oder Pflanzenschutzmitteln geeignet.

Die Prüfungsergebnisse zeigen, daß der Chemikalienbinder mit der Bezeichnung RAPID aus geschlossenzelligem Phenolharz-Schaumkunststoff, der gemahlen worden ist, ein hohes Aufsauge- und Bindevermögen gegenüber Säuren und Laugen, Alkoholen und Ester sowie Lösungsmittel und Salzlösungen hat.

Die Erfindung ist in der Zeichnung beispielhaft dargestellt.
Es zeigen:

Figur 1    in perspektivischer Ansicht ein Kissen,
Figur 2    im vertikalen Schnitt und schematisch eine Verpackung,
Figur 3    im vertikalen Schnitt eine weitere Verpackung,
Figur 4    ein abgewandeltes Kissen.

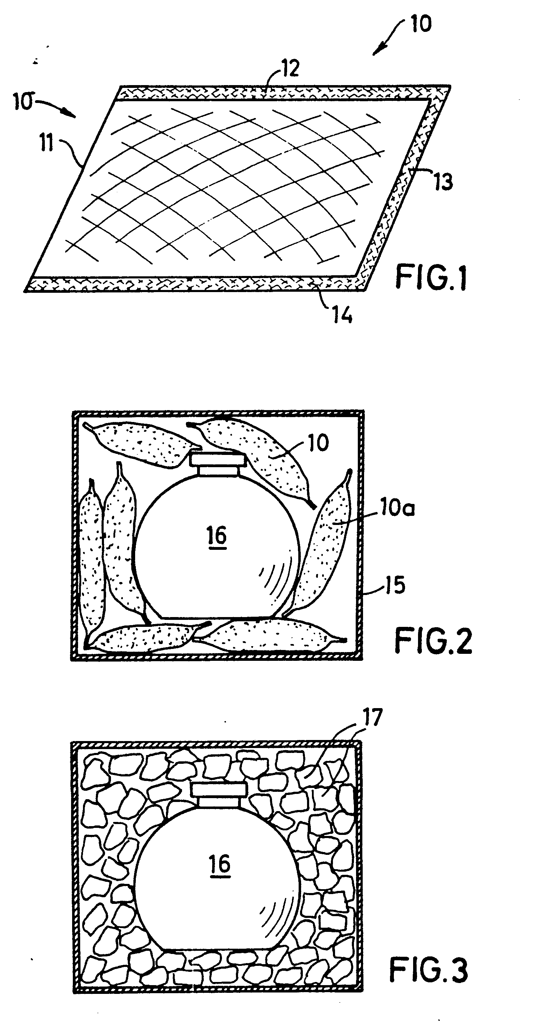

Nach Figur 1 besteht das Kissen 10 aus zwei Lagen eines Nylongewebes oder eines Vlieses, das um die Kante 11 umgeschlagen ist, deren Ränder 12, 13 und 14 verbunden sind. Sofern es sich um ein Gewebe aus Kunststoff handelt, erfolgt vorteilhaft die Verbindung durch Anwendung von Druck und Hitze. Sofern es sich um ein Vlies handelt, erfolgt die Verbindung vorzugsweise durch Klebung. Innerhalb dieser zwei Lagen ist ein gemahlener oder flockenförmiger Phenolharz-Schaumkunststoff vorhanden.

Figur 2 zeigt einen Behälter 15 mit einer Flasche 16, in der beispielsweise Flußsäure angeordnet ist. Innerhalb des Behälters 15 ist die Flasche 16 verpackt und abgesichert durch eine Vielzahl von Kissen 10, 10a mit dem abgebundenen Phenol-Derivat.

Figur 3 zeigt, daß die Flasche, die beispielsweise ein Pflanzenschutzmittel enthält, verpackt und gesichert ist durch Partikel 17 aus dem Phenolharz-Schaumkunststoff.

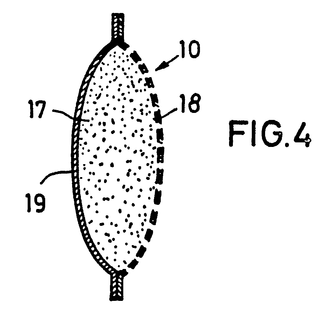

Figur 4 zeigt ein Kissen 10 oder dergleichen Behältnis, dessen eine Wandung 18, die der Flasche 16 zugerichtet ist, aus flüssigkeitsdurchlässigem Material, wie z. B. Faservlies oder ein Gewebe aus Stoff oder Kunststoff oder einer gelochten Kunststoffolie besteht, wodurch die gegenüberliegende Seite 19 aus flüssigkeitsundurchlässigem Material, z. B. einer Kunststoffolie besteht.

# 0 040 821

## Patentansprüche

1. Verwendung von geschlossenzelligem Phenolharzschaum, der gemahlen worden ist, zum Aufsaugen von Basen, Säuren, Alkoholen, radioaktiven Flüssigkeiten, Chlorkohlenwasserstoffen, Kunststoffmonomeren, Aldehyden, Ketonen, Aminen, Ethern, Estern, Pigmenten und Lösemitteln, Anstrichfarben und Druckfarben, Benzoylchlorid, Fixierbad, Fotoentwicklern, Tetramethylblei, Tetraethylblei, Pflanzenschutzmitteln und Salzlösungen.

2. Verwendung nach Anspruch 1, dadurch gekennzeichnet, daß der Phenolharzschaum zum Aufsaugen eine Base mit einer Säure und zum Aufsaugen einer Säure mit einer behandelt, belegt oder gemischt ist.

3. Verwendung nach Anspruch 2, dadurch gekennzeichnet, daß der Phenolharzschaum mit Calciumcarbonat vermischt ist.

4. Verwendung nach den Ansprüchen 1 bis 3, dadurch gekennzeichnet, daß der Phenolharzschaum in einem Kissen (10) angeordnet ist, dessen dem zu verpackenden Gut zugewandte Seite flüssigkeitsdurchlässig, die andere Seite jedoch flüssigkeitsundurchlässig ist.

## Claims

1. Use of closed cell phenol resin foam, which has been ground, for the sucking up of bases, acids, alcohols, radio-active liquids, chlorohydrocarbons, synthetic material monomers, aldehydes, ketones, amines, ethers, esters, pigments and solvents, brushing paints and printing inks, benzoyl chloride, fixing bath, photographic developers, tetramethyl lead, tetraethyl lead, plant protection means and salt solutions.

2. Use according to claim 1, characterised thereby, that the phenol resin foam is treated, covered or mixed with an acid for the sucking up of a base and treated, covered or mixed with a base for the sucking up of an acid.

3. Use according to claim 2, characterised thereby, that the phenol resin foam is intermixed with calcium carbonate.

4. Use according to the claims 1 to 3, characterised thereby, that the phenol resin foam is arranged in a cushion (10), the side of which facing the stock to be packed is permeable by liquid, the other side however being impermeable by liquid.

## Revendications

1. Application d'une mousse de résine phénolique à cellules fermées, qui a été broyée, à l'adsorption de bases, acides, alcools, liquides radio-actifs, hydrocarbures chlorés, monomères de matières synthétiques, aldéhydes, cétones, éthers, esters, pigments et solvants, colorants de peinture et encre d'imprimerie, chlorure de benzoyle, bain de fixage, développeur photo, tétraméthyl plomb, tétraéthyl plomb, pesticides et solutions salines.

2. Application selon la revendication 1, caractérisée en ce que, pour l'adsorption d'une base, la mousse de résine phénolique est traitée, garnie ou mélangée avec un acide et pour l'adsorption d'un acide, la mousse de résine phénolique est traitée, garnie ou mélangée avec une base.

3. Application selon la revendication 2, caractérisée en ce que, la mousse de résine phénolique est mélangée avec du carbonate de calcium.

4. Application selon les revendications 1 à 3, caractérisée en ce que la mousse de résine phénolique est disposée à l'intérieur d'un coussin (10), dont la face tournée vers l'objet à emballer est perméable aux liquides, tandis que l'autre face est imperméable aux liquides.

5

FIG.1

FIG.2

FIG.3

FIG.4